(19) **Europäisches Patentamt / European Patent Office / Office européen des brevets**

(11) **EP 3 331 300 A1**

(12) # EUROPEAN PATENT APPLICATION
published in accordance with Art. 153(4) EPC

(43) Date of publication:
**06.06.2018 Bulletin 2018/23**

(21) Application number: **16832704.7**

(22) Date of filing: **12.07.2016**

(51) Int Cl.:
***H04W 72/04*** *(2009.01)*

(86) International application number:
**PCT/JP2016/070532**

(87) International publication number:
**WO 2017/022425 (09.02.2017 Gazette 2017/06)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **31.07.2015 JP 2015152396**

(71) Applicant: **NTT DOCOMO, INC.**
**Chiyoda-ku**
**Tokyo 100-6150 (JP)**

(72) Inventors:
• **TAKEDA, Kazuki**
 **Tokyo 100-6150 (JP)**
• **NAGATA, Satoshi**
 **Tokyo 100-6150 (JP)**

(74) Representative: **Hoffmann Eitle**
**Patent- und Rechtsanwälte PartmbB**
**Arabellastraße 30**
**81925 München (DE)**

(54) **USER TERMINAL, WIRELESS BASE STATION, AND WIRELESS COMMUNICATION METHOD**

(57)    The present invention is designed so that communication can be carries out adequately even when the number of component carriers that can be configured in a user terminal is extended more than in existing systems. According to the present invention, a user terminal communicates by using a plurality of component carriers (CCs), has a generation section that generates uplink control information, and a mapping section that maps symbols indicating the uplink control information to radio resources used to transmit an uplink shared channel, and the mapping section maps the symbols indicating the uplink control information to five or more SC-FDMA (Single-Carrier Frequency Division Multiple Access) symbols within one TTI (Transmission Time Interval).

FIG. 3

EP 3 331 300 A1

## Description

Technical Field

The present invention relates to a user terminal, a radio base station and a radio communication method in next-generation mobile communication systems.

Background Art

In the UMTS (Universal Mobile Telecommunications System) network, the specifications of long term evolution (LTE) have been drafted for the purpose of further increasing high speed data rates, providing lower delays and so on (see non-patent literature 1). In addition, successor systems of LTE (referred to as, for example, "LTE-A" (LTE-Advanced), "FRA" (Future Radio Access), "5G" (5th generation mobile communication system) and so on) are also under study for the purpose of achieving further broadbandization and increased speed beyond LTE.

Carrier aggregation (CA) is one wideband technology in LTE-A (LTE Rel. 10 to 12). CA makes it possible to use a plurality of fundamental frequency blocks as one in communication. The fundamental frequency blocks in CA are referred to as "component carriers" (CCs), and are equivalent to the system band in LTE Rel. 8.

Also, in LTE/LTE-A, a user terminal (UE: User Equipment) feeds back uplink control information (UCI: Uplink Control Information (UCI)) to a device on the network side (for example, a radio base station (eNB: eNode B)). At the timing uplink data transmission is scheduled, the UE may transmit UCI using an uplink shared channel (PUSCH: Physical Uplink Shared Channel). The radio base station performs data retransmission control and scheduling control on the UE based on the received UCI.

Citation List

Non-Patent Literature

Non-Patent Literature 1: 3GPP TS 36.300 "Evolved Universal Terrestrial Radio Access (E-UTRA) and Evolved Universal Terrestrial Radio Access Network (E-UTRAN); Overall Description; Stage 2"

Summary of Invention

Technical Problem

Now, in CA in LTE Rel. 10 to 12, the number of CCs that can be configured per UE is limited to maximum of five. On the other hand, in LTE Rel. 13 and beyond, in order to realize more flexible and faster radio communication, a study is in progress to reduce the limit on the number of CCs that can be configured in a UE and to configure six or more CCs (more than five CCs). Here, carrier aggregation in which six or more CCs can be configured may be referred to as, for example, "enhanced CA," "Rel. 13 CA," and so on.

However, when the number of CCs that can be configured in a UE is extended to six or more (for example, 32), if UCI is transmitted in the PUSCH, problems such as shortage of radio resources and deterioration of signal quality occur, and there is a risk that the throughput improvement effect by CA may not be suitably obtained.

The present invention has been made in view of the above, and it is therefore an object of the present invention to provide a user terminal, a radio base station and a radio communication method, whereby communication can be carried out adequately even when the number of component carriers that can be configured in a user terminal is extended more than in existing systems.

Solution to Problem

A user terminal according to one aspect of the present invention communicates by using a plurality of component carriers (CCs), and the user terminal has a generation section that generates uplink control information, and a mapping section that maps symbols indicating the uplink control information to radio resources used to transmit an uplink shared channel, and the mapping section maps the symbols indicating the uplink control information to five or more SC-FDMA (Single-Carrier Frequency Division Multiple Access) symbols within one TTI (Transmission Time Interval).

Advantageous Effects of Invention

According to the present invention, communication can be carried out adequately even when the number of component carriers that can be configured in a user terminal is extended more than in existing systems

Brief Description of Drawings

FIG. 1 is a diagram to show an example of radio resource allocation in UCI on PUSCH in conventional LTE systems;
FIG. 2 is a diagram to show another example of radio resource allocation in UCI on PUSCH in conventional LTE systems;
FIG. 3 is a diagram to show an example of radio resource allocation in UCI on PUSCH according to an embodiment of the present invention;
FIG. 4 is a diagram to show an example of the UCI resource mapping rule according to the embodiment of the present invention;
FIG. 5A is a diagram to show an example where an A/N resource extension region is located at the center of the subframe and RI resource extension regions are located at ends of the subframe, and FIG. 5B is a diagram to show an example in which, in the resource extension regions, A/Ns are mapped first (preferentially) and RIs are mapped after A/Ns are arranged;
FIG. 6 is a diagram to show an example of a schematic structure of a radio communication system according to an embodiment of the present invention.
FIG. 7 is a diagram to show an example of an overall structure of a radio base station according to an embodiment of the present invention;
FIG. 8 is a diagram to show an example of a functional structure of a radio base station according to an embodiment of the present invention;
FIG. 9 is a diagram to show an example of an overall structure of a user terminal according to an embodiment of the present invention; and
FIG. 10 is a diagram to show an example of a functional structure of a user terminal according to an embodiment of the present invention.

Description of Embodiments

First, UCI feedback in conventional LTE systems (Rel. 10 - 12) will be described. UCI stipulated in LTE includes channel state information (CSI) such as a channel quality indicator (CQI), a precoding matrix indicator (PMI) and a rank indicator (RI), and retransmission control information (also referred to as HARQ-ACK (Hybrid Automatic Repeat reQuest-ACKnowledgment), ACK/NACK, A/N, etc.).

Feedback (UCI on PUCCH) to use the PUCCH (Physical Uplink Control Channel) and feedback to use the PUSCH (UCI on PUSCH) are defined as methods of feeding back UCI. Note that the latter is used when UCI transmission and PUSCH transmission overlap within one TTI (Transmission Time Interval) (for example, one subframe). In this case, although it is possible to use simultaneous PUCCH-PUSCH transmission, this transmission will be multicarrier transmission, and, normally UCI is mapped to radio resources in the PUSCH region and transmitted using only the PUSCH.

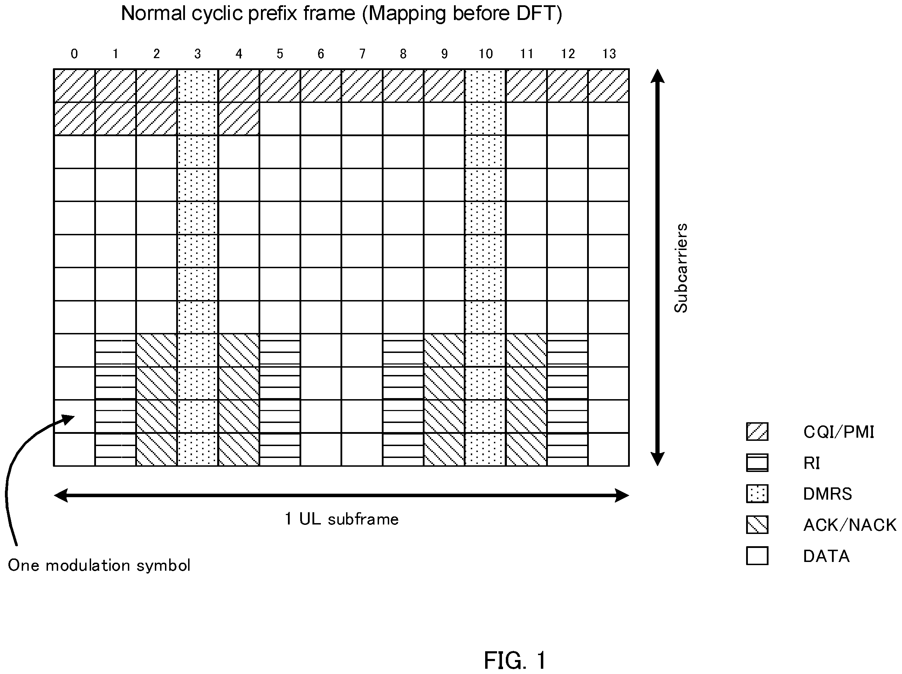

FIG. 1 is a diagram to show an example of radio resource allocation in UCI on PUSCH in conventional LTE systems. FIG. 1 shows uplink radio resources of one PRB (Physical Resource Block) pair (14 symbols × 12 subcarriers) when normal cyclic prefixes are assigned to each symbol. Note that FIG. 1 shows an image of mapping of radio resources before DFT (Discrete Fourier Transform) is applied, and the symbols to be actually transmitted are interleaved in the frequency direction and arranged. Also, FIG. 1 illustrates an exemplary case where simultaneous PUCCH-PUSCH transmission is not applied (not configured).

In FIG. 1, the DMRS (DeModulation Reference Signal) is arranged in the center symbol of each slot (seven symbols), and DFT is not applied. CQI/PMI are placed in the frequency domain at one end of the PRB. RI is encoded according to target signal quality, apart from CQI/PMI. Note that rate matching is applied to data (DATA) and CQI/PMI, rate matching is applied to data and RI, and data is punctured when there is an A/N.

The diagrams to illustrate radio resource allocation hereinafter will show images of radio resource mapping before applying the DFT is applied, where simultaneous PUCCH-PUSCH transmission is not applied, similar to FIG. 1.

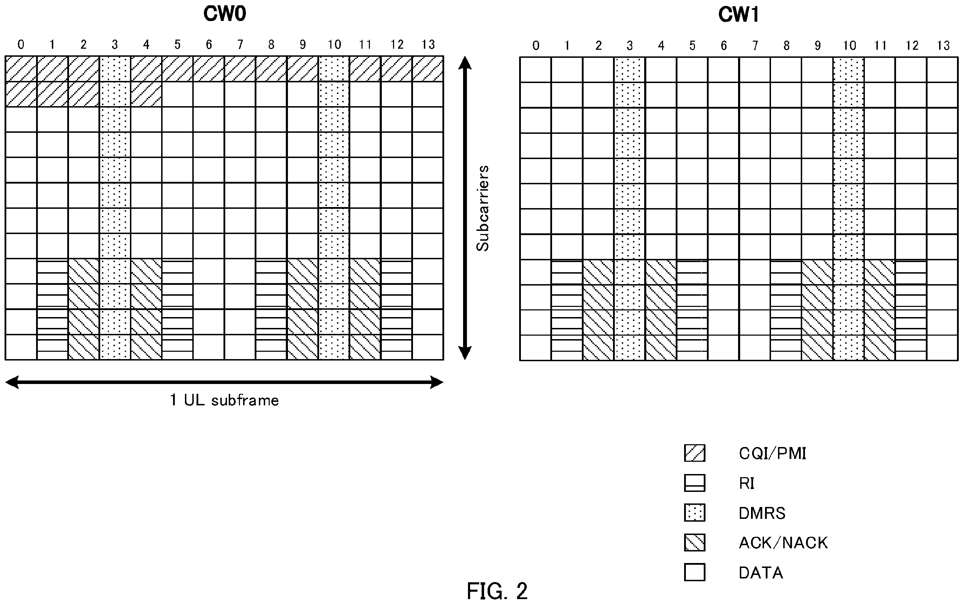

FIG. 2 is a diagram to show another example of radio resource allocation in UCI on PUSCH in conventional LTE systems. FIG. 2 shows the same configuration as in FIG. 1, where UL-MIMO (Uplink Multi Input Multi Output) is applied to the UE, and where CW 0 and CW 1, which are codewords (CWs) of two layers, are shown.

HARQ-ACK/RI is duplicated across all layers of both CWs. On the other hand, CQI/PMI is transmitted only in one CW of a larger TBS (Transport Block Size). If both CWs have the same TBS, the first CW (for example, CW 0) is selected. If there is only one CW, the same mapping as in Rel-8 SIMO (Single Input Multi Output) is used.

Now, in LTE Rel. 13, CA to configure six or more CCs (more than five CCs) (referred to as "enhanced CA," "Rel. 13 CA," etc.) is under study. For example, Rel. 13 CA is studied for bundling maximum 32 CCs.

However, in existing LTE systems, there is no provision as to how to "piggy-back" (transmit) UCI of more than five CCs on the PUSCH. Also, what kind of encoding method should be applied to UCI of more than five CCs is not studied either.

For example, in conventional LTE systems, for both A/N and RI, the maximum resources that can be allocated are four SC-FDMA (Single-Carrier Frequency Division Multiple Access) symbols. Here, assuming CA of 32 CCs, if the payload is equivalent to four SC-FDMA symbols, when the number of PRBs to be allocated is small, the coding rate (= the number of transmission bits/the number of resources) becomes too high and sufficient quality cannot be secured, or it may be expected that resources will run short and UCI cannot be transmitted. As a result, there is a risk that the throughput improvement effect by enhanced CA cannot be suitably achieved.

Therefore, the present inventors have come up with the idea of assigning UCI to resources that cannot be used for UCI transmission in conventional LTE systems. Then, the present inventors have found out a new resource mapping method that can implement UCI transmission that is suitable for CA to use six or more CCs (for example, 32 CCs) in LTE Rel. 13 or later versions.

Now, embodiments of the present invention will be described below. Now, although example cases will be described with the following embodiments in which CA to use maximum 32 CCs is configured in user terminals, the application of the present invention is by no means limited to this. For example, the BSRs that will be described with each embodiment below can be used even when CA is configured with five or fewer CCs.

(Radio communication method)

Prior to the embodiment according to the present invention, resource mapping of conventional HARQ-ACK/RI will be described first. In conventional LTE, data symbols in which HARQ-ACKs and RIs can be mapped are 48 symbols per PRB (= 4 SC-FDMA symbols × 12 subcarriers), and therefore 48 symbols × the number of PRBs can be used. Therefore, the amount of resources (coding rate) is limited by the number of scheduled PRBs.

More specifically, the number of HARQ-ACK/RI symbols (the number of coded modulation symbols per layer) is given by Q' of equation 1 (in non-MIMO) or by Q' of equation 2 (in MIMO).

$$Q' = \min\left(\left\lceil \frac{O \cdot M_{sc}^{PUSCH-initial} \cdot N_{symb}^{PUSCH-initial} \cdot \beta_{offset}^{PUSCH}}{\sum_{r=0}^{C-1} K_r} \right\rceil, 4 \cdot M_{sc}^{PUSCH}\right) \quad \dots \text{(Equation 1)}$$

$$Q' = \max\left[\min\left(Q'_{temp}, 4 \cdot M_{sc}^{PUSCH}\right), Q'_{\min}\right] \quad \dots \text{(Equation 2)}$$

where $M_{sc}^{PUSCH}$ is the bandwidth scheduled for PUSCH transmission and represented by the number of subcarriers.

Also, $Q'_{temp}$ and $Q'_{\min}$ are variable that rely on the number of HARQ-ACK/RI bits.

That is, in conventional LTE systems, when the number of HARQ-ACK/RI symbols to be transmitted in one TTI (one subframe) is more than four times the number of subcarriers scheduled for the PUSCH (MscPUSCH), not all symbols be transmitted in the TTI.

Therefore, in one embodiment of the present invention, the amount of resources (the number of symbols) that can be allocated to HARQ-ACK and/or RI is increased. That is, HARQ-ACK and/or RI symbols are mapped to five or more SC-FDMA symbols within one TTI. To be more specific, the UE is controlled so that UCI is mapped to the zeroth, sixth, seventh, and thirteenth SC-FDMA symbols, which are conventionally used as used as data regions.

Also, in SRS subframes (subframes in which the UE and/or other UEs transmit the SRSs), the UE maps UCI to the zeroth, sixth, and seventh SC-FDMA symbols, except for the thirteenth SC-FDMA symbol. By doing this, it is possible to extend the resources that can be used for UCI while suppressing interference with SRSs.

In the present invention, new radio resources that can be used for PUSCH transmission and can be allocated to UCI may be referred to as, for example, "UCI resource extension regions," "resource extension regions," "new resource region," etc.

The UCI transmission procedure according to the present embodiment will be described. First, the UE calculates the number of symbols of each UCI (for example, HARQ-ACK, RI) according to the MCS (Modulation and Coding Scheme) of data, the number of PRBs, the number of UCI bits, etc.

More specifically, the number of HARQ-ACK/RI symbols (the number of encoded modulated symbols per layer) are given by Q' of equation 3 (in non-MIMO) or Q' of equation 4 (in MIMO), instead of equation 1 or equation 2.

$$Q' = \min\left(\left\lceil \frac{O \cdot M_{sc}^{PUSCH-initial} \cdot N_{symb}^{PUSCH-initial} \cdot \beta_{offset}^{PUSCH}}{\sum_{r=0}^{C-1} K_r} \right\rceil, (8 - N_{SRS}) \cdot M_{sc}^{PUSCH}\right) \qquad \dots \text{(Equation 3)}$$

$$Q' = \max\left[\min\left(Q'_{temp}, (8 - N_{SRS}) \cdot M_{sc}^{PUSCH}\right), Q'_{\min}\right] \qquad \dots \text{(Equation 4)}$$

where $N_{SRS}$ is a value related to SRS subframes, and for example, $N_{SRS}$ = 1 when there is an SRS subframe, and $N_{SRS}$ = 0 otherwise.

While, conventionally, the number of SC-FDMA symbols for HARQ-ACK/RI is maximum four, equations 3 and 4 show that up to maximum eight symbols can be used.

Next, the UE applies predetermined encoding to each UCI to obtain the CW. Then, the UE multiplexes each obtained UCI bit sequence with data (PUSCH signal) and interleaves this bit sequence. In addition, the UE applies scrambling to the interleaved bit sequence, performs processing such as data modulation and mapping (resource allocation), and finally transmits an SC-FDMA signal.

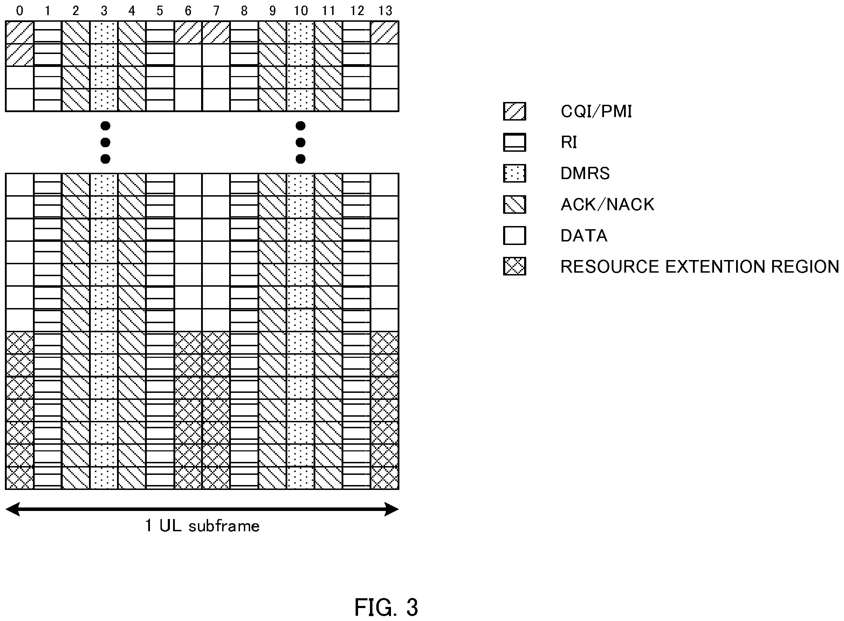

Below mapping will be described in greater detail. FIG. 3 is a diagram to show an example of radio resource allocation in UCI on PUSCH according to the embodiment of the present invention. According to existing mapping (interleaving) rules, the UE first fills existing four SC-FDMA symbols available for allocation to UCI. To be more specific, when the UCI is A/N, the UE maps the A/N to the second, fourth, ninth and eleventh SC-FDMA symbols within one TTI. Also, if the UCI is RI, the UE maps the RI to the first, fifth, eighth and twelfth SC-FDMA symbols in one TTI.

Then, if the assignment of UCI is not complete after the UCI assigns to the four conventional SC-FDMA symbols, the remaining A/N and/or RI bit sequences are assigned to the zeroth, sixth, seventh (and thirteenth) symbols.

Although FIG. 3 shows an example in which UCI is assigned to a plurality of PRBs, this is by no means limiting, and UCI may be assigned to one PRB. Although FIG. 3 shows an example in which the number of HARQ-ACK/RI symbols is 28 symbols larger than the number of HARQ-ACK/RI symbols, which is four times the number of subcarriers scheduled for the PUSCH, and in which seven subcarriers are provided as resource extension regions for each of the zeroth, sixth, seventh and thirteenth SC-FDMA symbols, the arrangement of resource extension regions is not limited to this.

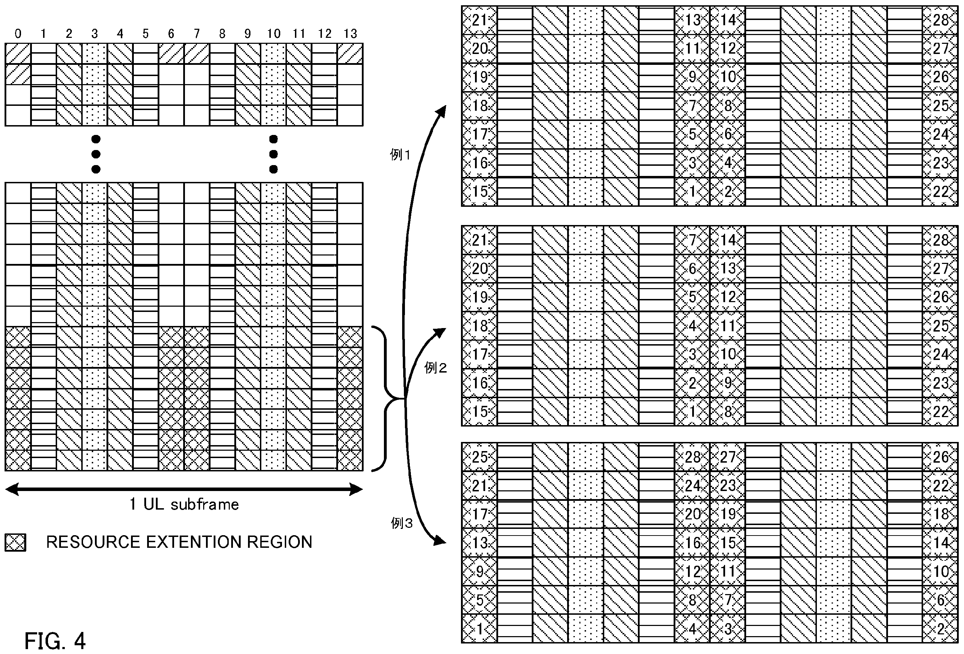

Next, the resource mapping rules in the resource extension regions will be explained. FIG 4 is a diagram to show an example of resource mapping rules of UCI according to the embodiment of the present invention. In FIG. 4, the number attached to the resource extension regions show the order of symbol allocation in each of the three examples (example 1 to example 3).

The UE may preferentially place resource extension region in the SC-FDMA symbols in the center of the subframe as in example 1 and example 2 shown in FIG. 4. In the resource extension region shown in example 1, the UE places the UCI (remaining A/N and/or RI bit sequences) in the sixth and the seventh SC-FDMA symbols, alternately (fill in zigzag order), while shifting the subcarriers (for example, in order from low frequency to high frequency). When there are no more symbols where the UCI can be arranged in the sixth and seventh SC-FDMA symbols, the UE shifts the subcarrier to the zeroth SC-FDMA symbol and arranges the UCI. Furthermore, when there are no more symbols where the UCI can be arranged in the zeroth SC-FDMA symbol, the UE shifts the subcarrier to the thirteenth SC-FDMA symbol and arranges the UCI.

Also, in the resource extension region shown in example 2, the UE arranges UCI in the order of the sixth, seventh, zeroth and thirteenth SC-FDMA symbols. As shown in examples 1 and 2, by placing UCI by avoiding the top symbol (the zeroth SC-FDMA symbol) as much as possible, it is possible to suppress the influence the rising waveform distortion has on the UCI. As in examples 1 and 2, by arranging UCI in the tail symbol (thirteenth SC-FDMA symbol) in the end, the mapping of UCI can be made common between SRS subframes and non-SRS subframes, so that it is possible to simplify the method of implementing transmission signals in the UE, and to simplify the UCI detection procedure in the eNB.

Also, in the resource extension region shown in example 3, the UE may distribute UCI such that the zeroth, sixth, seventh and thirteenth SC-FDMA symbols are filled in a well-balanced manner. In example 3, the UCI is arranged while being shifted for each subcarrier in the order of the zeroth, thirteenth, seventh and sixth SC-FDMA symbols. In other words, the UCI is mapped so that the difference in the number of mapped symbols is one or less among the zeroth, sixth, seventh and thirteenth SC-FDMA symbols within one TTI. According to this configuration, it is possible to prevent excessive concentration of consecutive information bits in specific symbols, and to reduce the occurrence of burst errors.

When ordering UCI in a well-balanced manner, the order of SD-FDMA symbols is not limited to the order of example 3. Also, the UE may be configured not to assign UCI to the thirteenth SC-FDMA symbol in SRS subframes (the UE skips assigning UCI to the thirteenth SC-FDMA symbol -- that is, the UE makes a shift subcarrier, in the order of the zeroth, seventh and sixth SC-FDMA symbols).

Next, the case of feeding back (simultaneously multiplexing) both A/N and RI in one TTI will be described. If conventional SC-FDMA symbols are not enough to be allocated to both A/N and RI, the resource extension regions may be allocated to the A/N resource and the RI resource. In this case, the A/N resource and the RI resource may be randomly mapped, but an example of more effective resource mapping (resource partitioning) will be shown below.

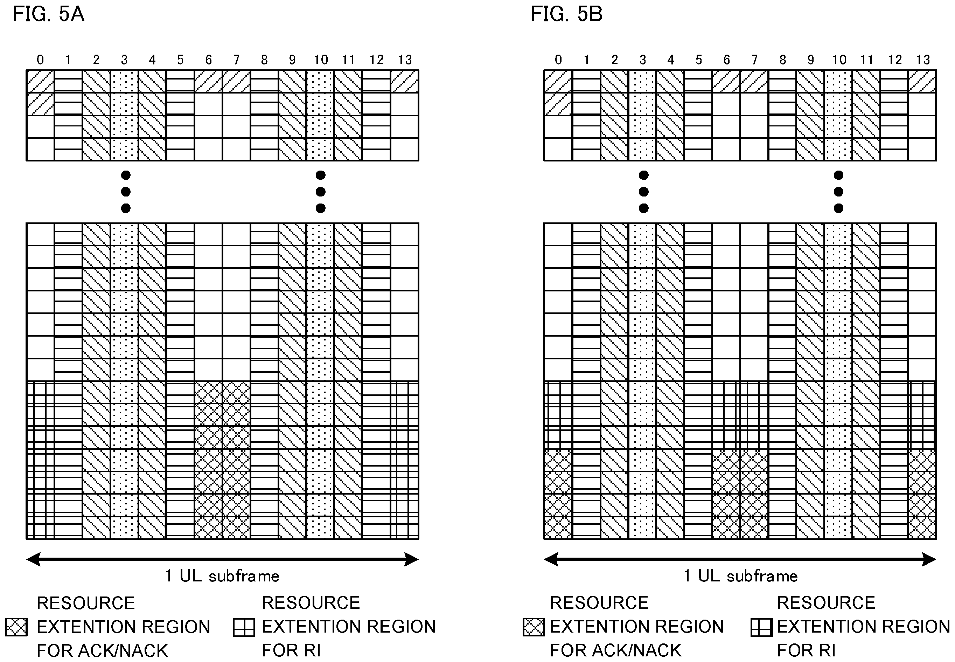

FIG. 5 is a diagram to show another example of radio resource allocation in UCI on PUSCH according to the embodiment of the present invention. In FIG. 5A, the center of the subframe (the sixth and/or the seventh SC-FDMA symbol) is an A/N resource extension region and the ends of the subframe (the zeroth and/or the thirteenth SC-FDMA symbols) are RI resource extension regions. A/N and RI may be each arranged according to the above-mentioned resource mapping rule. According to the configuration of FIG. 5A, central symbols that are not affected by waveform distortion and SRS rate matching can be assigned to more important A/N resources, so that reduction in reliability of retransmission control can be suppressed.

Note that, in the example of FIG. 5A, the A/N resource extension region and the RI resource extension regions are composed of the same number of SC-FDMA symbols (two), but the present invention is not limited to this. The number of SC-FDMA symbols may be different between the A/N resource extension region and the RI resource extension regions, and, for example, a configuration in which three SC-FDMA symbols are allocated to the former and one SC-FDMA symbol is allocated to the latter may be used.

In the example shown in FIG. 5B, A/N is mapped first (preferentially) to the resource extension region, and RI is mapped after A/N has been arranged. A/N and RI may be each arranged according to the above-mentioned resource mapping rule. According to the configuration of FIG. 5B, it becomes possible allow A/N and RI to be equally influenced by waveform distortion and SRS-based rate matching. Since A/N, which is more important, is preferentially mapped, it is possible to prevent the situations where A/N cannot be transmitted. In this case, since RI is assigned to remaining resource extension regions, if few PRBs are scheduled and there is little resource extension region, transmission may be made by dropping RI.

In addition to the case where the number of HARQ-ACK/RI symbols is larger than four times the number of subcarriers scheduled for PUSCH as a condition for mapping UCI to resource extension regions, for example, any one of, or any combination of, the following conditions can be used:

(1) CA using six or more CCs is configured;
(2) The HARQ-ACK/RI payload exceeds the provision of Rel. 12 or earlier;
(3) The number of UCI bits + the number of CRC (Cyclic Redundancy Check) bits exceeds a predetermined value; and
(4) Even if the resource extension region is used for UCI, the coding rate of UL-SCH (Uplink Shared Channel) does not exceed a predetermined value.

The conditions for using the resource extension regions are not limited to these.

The condition of (2) may be applied, for example, when the number of HARQ-ACK feedback bits exceeds 22 bits, when the number of RI feedback bits exceeds 15 bits, etc. The condition of (3) may be applied, for example, when the UCI bits + CRC bits exceeds 32 bits, etc.

Also in the condition of (4), the coding rate of UL-SCH = the number of bits before data encoding/the number of data symbols may be used. Although the data coding rate increases when a resource extension region is allocated to UCI, when the coding rate becomes equal to or higher than a predetermined value (for example, when the coding rate significantly exceeds 1), it is expected that securing quality becomes difficult. Therefore, deterioration of quality can be suppressed by calculating the coding rate of the UL-SCH when the resource extension region is allocated to UCI, and judging whether or not the resource extension region can be used based on this.

The following control may be applied to the symbols to map to the resource extension region. When HARQ-ACK is mapped, TBCC (Tail Biting Convolutional Coding) may be applied to the encoding of the HARQ-ACK bits, or a dual block code of (32, A) may be applied. Before encoding, an 8-bit or 16-bit CRC may be added, or a CRC exceeding 16 bits may be added.

Also, if RI is mapped, TBCC may be applied to encoding the RI bits or a dual block code of (32, A) may be applied. Before encoding, an 8-bit or 16-bit CRC may be added, or a CRC exceeding 16 bits may be added.

According to the embodiment of the present invention described above, the UE can transmit UCI corresponding to many CCs in the PUSCH even when the CA using more CC than five CCs is applied.

<Variation>

The examples shown in each of the above embodiments are only examples, and the present invention is not limited to these examples. In each of the above-described embodiments, a symbol to which a normal cyclic prefix indicating UCI is added has been described as an example, the cyclic prefix to be added is not limited to this, and an extended cyclic prefix may be used, for example. Even in this case, the above resource allocation and mapping rules may be applied as they are, or may be modified and applied. For example, the UE may map symbols with extended cyclic prefixes indicating UCI to at least one of the zeroth and the eleventh SC-FDMA symbols in one TTI.

In each of the above embodiments, the maximum number of symbols that include resource extension regions and can be allocated to HARQ-ACK and/or RI is eight, but the present invention is not limited to this. For example, when the largest number of the symbols is N, it is possible to calculate the number of HARQ-ACK/RI symbols by using an equation in which "8" in equations 3 and 4 is replaced with "N." N may be greater or less than eight (for example, four or greater and less than eight).

Also, each embodiment descried above may be configured so that, when the UE applies UL-MIMO, a resource extention region for HARQ-ACK/RI may be reserved in all layers of both CWs and the same HARQ-ACK/RI bit may be duplicated across all layers of both CWs. That is, a resource extension region for HARQ-ACK/RI is secured in all layers of both CWs, and HARQ-ACK/RI is mapped and copied to the corresponding resource extension region. By this, HARQ-ACK/RI can obtain space (antenna) diversity effect and have improved reliability.

Alternatively, in the above embodiments, when the UE applies UL-MIMO, a resource extension region for HARQ-ACK/RI may be reserved only in one CW with the largest TBS (Transport Block Size). At this time, if all CWs have the same TBS, the first CW (for example, CW 0) may be selected. This prevents the overhead of UCI from becoming too large, so that it is possible to keep the coding rate of UL-SCH low.

The eNB may report information on resource extension regions to the UE using higher layer signaling (for example, RRC signaling) or downlink control information (for example, DCI), or by combining these. In addition, the UE may store in advance information on resource extension regions.

The information on resource extension regions may include, at least one of, for example, information on the availability of resource extension regions, information used for calculating the number of HARQ-ACK/RI symbols, information on the configuration of resource extension regions (for example, information to specify the SC-FDMA symbol indices of resource extension regions), information regarding resource mapping rules in resource extension regions (for example, the order of allocation of SC-FDMA symbols, priority of A/N resource and RI resource, and the like), and information on the encoding method of UCI (HARQ- ACK, RI, and the like).

The UE may also report terminal capability information (UE capability), indicating that UCI can be mapped to the resource extension regions, to the eNB. The eNB may be configured to report the information on resource extension regions to the UE that report that terminal capability information. For example, the eNB may notify the user terminal that has notified both the terminal capability information indicating that CA using more than five CCs can be configured and the terminal capability information indicating that UCI can be mapped to resource extension regions, of the information on resource extension regions.

In each of the above embodiments, the configuration is shown in which UCI is mapped to five or more SC-FDMA symbols within one TTI (one subframe) and transmitted in the PUSCH, but the application of the present invention is not limited to this. For example, in a radio communication system, even when a period (shortened TTI) shorter than one TTI in conventional LTE systems is used as a TTI and a period longer than one TTI (super subframe) is used as a TTI, UCI may be mapped to five or more SC-FDMA symbols in a shorter/longer TTI than conventional TTIs (subframes) and transmitted in the PUSCH.

Also, in each of the above-described embodiments, uplink signals are transmitted as SC-FDMA symbols, but this is not limiting. For example, the present invention can be applied even when uplink signals are transmitted in other symbol formats such as OFDMA (Orthogonal Frequency Division Multiple Access) symbols, etc. That is, the UE may map UCI to five or more predetermined symbol durations (reciprocal of the symbol rate) within one TTI and transmit these in the PUSCH.

Note that the radio communication methods of the above-described embodiments may be applied individually or may be applied in combination.

(Radio Communication System)

Now, the structure of the radio communication system according to an embodiment of the present invention will be described below. In this radio communication system, the radio communication methods according to the above-described embodiments of the present invention are employed.

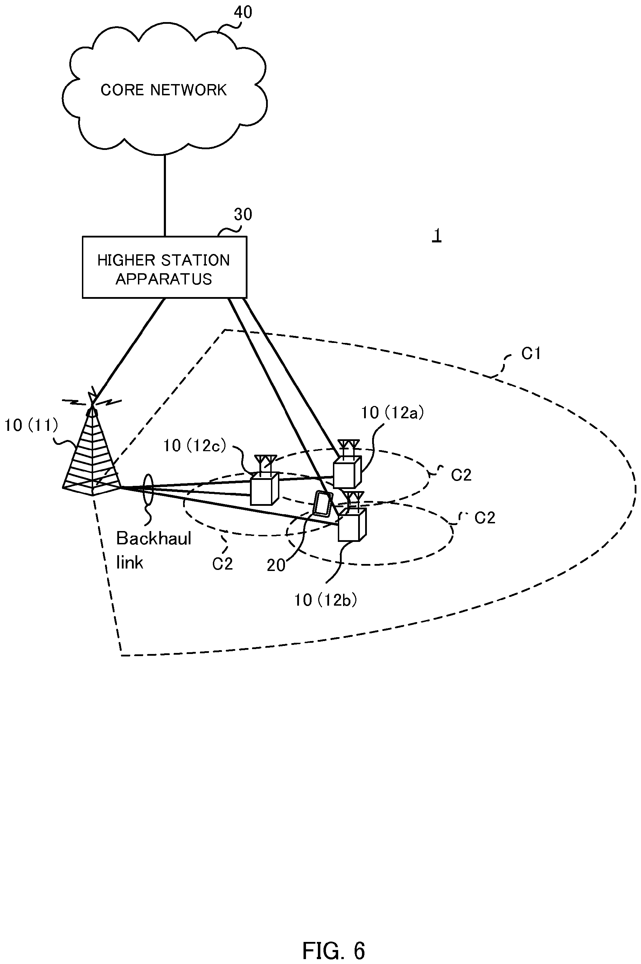

FIG. 6 is a diagram to show an example of a schematic structure of a radio communication system according to an embodiment of the present invention. The radio communication system 1 can adopt carrier aggregation (CA) and/or dual connectivity (DC) to group a plurality of fundamental frequency blocks (component carriers) into one, where the LTE system bandwidth (for example, 20 MHz) constitutes one unit. Note that the radio communication system 1 may be referred to as "SUPER 3G," "LTE-A," (LTE-Advanced)," "IMT-Advanced," "4G" (4th generation mobile communication system), "5G" (5th generation mobile communication system), "FRA" (Future Radio Access) and so on.

The radio communication system 1 shown in FIG. 6 includes a radio base station 11 that forms a macro cell C1, and radio base stations 12 (12a to 12c) that form small cells C2, which are placed within the macro cell C1 and which are narrower than the macro cell C1. Also, user terminals 20 are placed in the macro cell C1 and in each small cell C2.

The user terminals 20 can connect with both the radio base station 11 and the radio base stations 12. The user terminals 20 may use the macro cell C1 and the small cells C2, which use different frequencies, at the same time, by means of CA or DC. Also, the user terminals 20 can execute CA or DC by using a plurality of cells (CCs) (for example, six or more CCs).

Between the user terminals 20 and the radio base station 11, communication can be carried out using a carrier of a relatively low frequency band (for example, 2 GHz) and a narrow bandwidth (referred to as, for example, an "existing carrier," a "legacy carrier" and so on). Meanwhile, between the user terminals 20 and the radio base stations 12, a carrier of a relatively high frequency band (for example, 3.5 GHz, 5 GHz and so on) and a wide bandwidth may be used, or the same carrier as that used in the radio base station 11 may be used. Note that the configuration of the frequency band for use in each radio base station is by no means limited to these.

A structure may be employed here in which wire connection (for example, means in compliance with the CPRI (Common Public Radio Interface) such as optical fiber, the X2 interface and so on) or wireless connection is established between the radio base station 11 and the radio base station 12 (or between two radio base stations 12).

The radio base station 11 and the radio base stations 12 are each connected with a higher station apparatus 30, and are connected with a core network 40 via the higher station apparatus 30. Note that the higher station apparatus 30 may be, for example, an access gateway apparatus, a radio network controller (RNC), a mobility management entity (MME) and so on, but is by no means limited to these. Also, each radio base station 12 may be connected with higher station apparatus 30 via the radio base station 11.

Note that the radio base station 11 is a radio base station having a relatively wide coverage, and may be referred to as a "macro base station," a "central node," an "eNB" (eNodeB), a "transmitting/receiving point" and so on. Also, the radio base stations 12 are radio base stations having local coverages, and may be referred to as "small base stations," "micro base stations," "pico base stations," "femto base stations," "HeNBs" (Home eNodeBs), "RRHs" (Remote Radio Heads), "transmitting/receiving points" and so on. Hereinafter the radio base stations 11 and 12 will be collectively referred to as "radio base stations 10," unless specified otherwise.

The user terminals 20 are terminals to support various communication schemes such as LTE, LTE-A and so on, and may be either mobile communication terminals or stationary communication terminals.

In the radio communication system 1, as radio access schemes, OFDMA (Orthogonal Frequency Division Multiple Access) is applied to the downlink, and SC-FDMA (Single-Carrier Frequency Division Multiple Access) is applied to the uplink. OFDMA is a multi-carrier communication scheme to perform communication by dividing a frequency bandwidth into a plurality of narrow frequency bandwidths (subcarriers) and mapping data to each subcarrier. SC-FDMA is a single-carrier communication scheme to mitigate interference between terminals by dividing the system bandwidth into bands formed with one or continuous resource blocks per terminal, and allowing a plurality of terminals to use mutually different bands. Note that the uplink and downlink radio access schemes are by no means limited to the combination of these.

In the radio communication system 1, a downlink shared channel (PDSCH: Physical Downlink Shared CHannel), which is used by each user terminal 20 on a shared basis, a broadcast channel (PBCH: Physical Broadcast CHannel), downlink L1/L2 control channels and so on are used as downlink channels. The PDSCH may be referred to as a "down link data channel." User data, higher layer control information and predetermined SIBs (System Information Blocks) are communicated in the PDSCH. Also, the MIB (Master Information Blocks) is communicated in the PBCH.

The downlink L1/L2 control channels include a PDCCH (Physical Downlink Control CHannel), an EPDCCH (Enhanced Physical Downlink Control CHannel), a PCFICH (Physical Control Format Indicator CHannel), a PHICH (Physical Hybrid-ARQ Indicator CHannel) and so on. Downlink control information (DCI) including PDSCH and PUSCH scheduling information is communicated by the PDCCH. The number of OFDM symbols to use for the PDCCH is communicated by the PCFICH. HARQ delivery acknowledgement signals (ACKs/NACKs) in response to the PUSCH are communicated by the PHICH. The EPDCCH is frequency-division-multiplexed with the PDSCH and used to communicate DCI and so on, like the PDCCH.

In the radio communication system 1, an uplink shared channel (PUSCH: Physical Uplink Shared CHannel), which is used by each user terminal 20 on a shared basis, an uplink control channel (PUCCH: Physical Uplink Control CHannel), a random access channel (PRACH: Physical Random Access CHannel) and so on are used as uplink channels. The PUSCH may be referred to as an uplink data channel. User data and higher layer control information are communicated by the PUSCH. Also, downlink radio quality information (CQI: Channel Quality Indicator), delivery acknowledgment information (ACKs/NACKs) and so on are communicated by the PUCCH. By means of the PRACH, random access preambles for establishing connections with cells are communicated.

In the radio communication systems 1, cell-specific reference signals (CRSs), channel state information reference signals (CSI-RSs), demodulation reference signal (DMRSs) and so on are communicated as downlink reference signals. Also, in the radio communication system 1, a measurement reference signal (SRS: Sounding Reference Signal), a demodulation reference signal (DMRS: DeModulation Reference Signal), etc. are transmitted as uplink reference signals. Note that, DMRSs may be referred to as "user terminal-specific reference signals" (UE-specific Reference Signals). Also, the reference signals to be communicated are by no means limited to these.

(Radio base station)

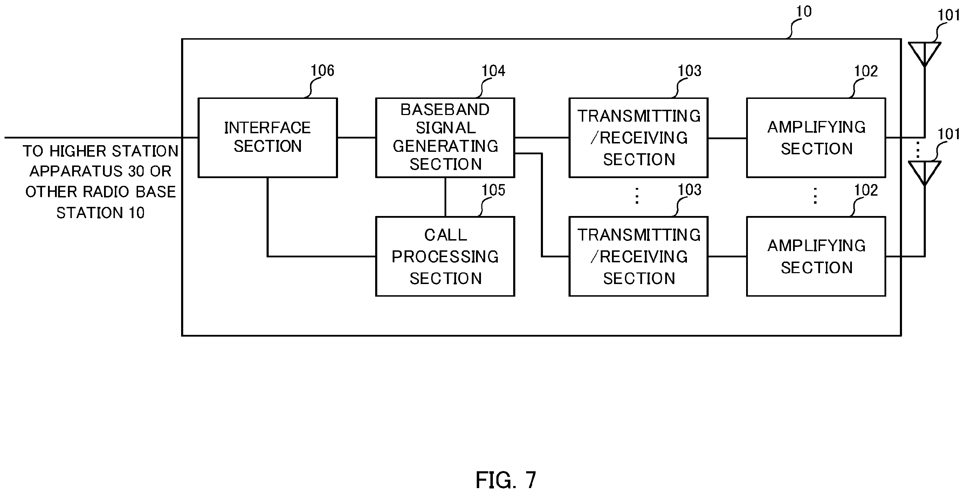

FIG. 7 is a diagram to show an example of an overall structure of a radio base station according to one embodiment of the present invention. A radio base station 10 has a plurality of transmitting/receiving antennas 101, amplifying sections 102, transmitting/receiving sections 103, a baseband signal processing section 104, a call processing section 105 and a communication path interface 106. Note that one or more transmitting/receiving antennas 101, amplifying sections 102 and transmitting/receiving sections 103 may be provided.

User data to be transmitted from the radio base station 10 to a user terminal 20 on the downlink is input from the higher station apparatus 30 to the baseband signal processing section 104, via the communication path interface 106.

In the baseband signal processing section 104, the user data is subjected to a PDCP (Packet Data Convergence Protocol) layer process, user data division and coupling, RLC (Radio Link Control) layer transmission processes such as RLC retransmission control, MAC (Medium Access Control) retransmission control (for example, an HARQ (Hybrid Automatic Repeat reQuest) transmission process), scheduling, transport format selection, channel coding, an inverse fast Fourier transform (IFFT) process and a precoding process, and the result is forwarded to each transmitting/receiving section 103. Furthermore, downlink control signals are also subjected to transmission processes such as channel coding and an inverse fast Fourier transform, and forwarded to each transmitting/receiving section 103.

Baseband signals that are pre-coded and output from the baseband signal processing section 104 on a per antenna basis are converted into a radio frequency band in the transmitting/receiving sections 103, and then transmitted. The radio frequency signals having been subjected to frequency conversion in the transmitting/receiving sections 103 are amplified in the amplifying sections 102, and transmitted from the transmitting/receiving antennas 101. The transmitting/receiving sections 103 can be constituted by transmitters/receivers, transmitting/receiving circuits or transmitting/receiving devices that can be described based on common understanding of the technical field to which the present invention pertains. Note that a transmitting/receiving section 103 may be structured as a transmitting/receiving section in one entity, or may be constituted by a transmitting section and a receiving section.

Meanwhile, as for uplink signals, radio frequency signals that are received in the transmitting/receiving antennas 101 are each amplified in the amplifying sections 102. The transmitting/receiving sections 103 receive the uplink signals amplified in the amplifying sections 102. The received signals are converted into the baseband signal through frequency conversion in the transmitting/receiving sections 103 and output to the baseband signal processing section 104.

In the baseband signal processing section 104, user data that is included in the uplink signals that are input is subjected to a fast Fourier transform (FFT) process, an inverse discrete Fourier transform (IDFT) process, error correction decoding, a MAC retransmission control receiving process, and RLC layer and PDCP layer receiving processes, and forwarded to the higher station apparatus 30 via the communication path interface 106. The call processing section 105 performs call processing such as setting up and releasing communication channels, manages the state of the radio base station 10 and manages the radio resources.

The communication path interface section 106 transmits and receives signals to and from the higher station apparatus 30 via a predetermined interface. Also, the communication path interface 106 may transmit and receive signals (backhaul signaling) with other radio base stations 10 via an inter-base station interface (for example, an interface in compliance with the CPRI (Common Public Radio Interface) m such as optical fiber, the X2 interface).

Note that the transmitting/receiving sections 103 transmit information (for example, DCI) commanding transmission of an uplink shared channel for a predetermined CC to the user terminal 20. The command information may be referred to as a UL grant (Uplink grant) or scheduling information.

Further, the transmitting/receiving sections 103 receive UCI (for example, HARQ-ACK and/or RI) transmitted from the user terminal 20 in the PUSCH in resource extension regions based on the command information. The symbols indicating the UCI may be mapped to five or more symbol times (symbol durations) within one TTI.

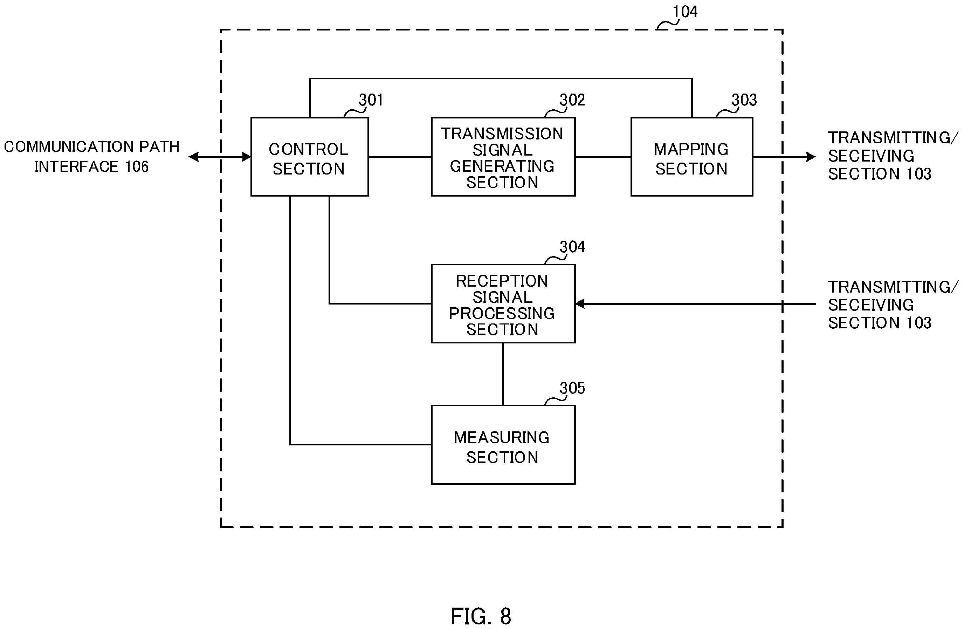

FIG. 8 is a diagram to show an example of functional structure of a radio base station according to one embodiment of the present invention. Note that, although FIG. 8 primarily shows functional blocks that pertain to characteristic parts of the present embodiment, the radio base station 10 has other functional blocks that are necessary for radio communication as well. As shown in FIG. 8, the baseband signal processing section 104 at least has a control section (scheduler) 301, a transmission signal generating section 302, a mapping section 303, a received signal processing section 304 and a measurement section 305.

The control section (scheduler) 301 controls the whole of the radio base station 10. The control section 301 can be constituted by a controller, a control circuit or a control device that can be described based on common understanding of the technical field to which the present invention pertains.

The control section 301, for example, controls the generation of signals in the transmission signal generating section 302, the assignment of signals by the mapping section 303, and so on. Furthermore, the control section 301 controls the signal receiving processes in the received signal processing section 304, the measurements of signals in the measurement section 305, and so on.

The control section 301 controls the scheduling (for example, resource allocation) of downlink data signals that are transmitted in the PDSCH and downlink control signals that are communicated in the PDCCH and/or the EPDCCH. Also, the control section 301 controls the scheduling of downlink reference signals such as synchronization signals (the PSS (Primary Synchronization Signal) and the SSS (Secondary Synchronization Signal)), the CRS, the CSI-RS, the DM-RS and so on.

Also, the control section 301 controls the scheduling of uplink data signals transmitted in the PUSCH, uplink control signals transmitted in the PUCCH and/or the PUSCH (for example, delivery acknowledgement signals (HARQ-ACKs)), random access preambles transmitted in the PRACH, uplink reference signals and so on.

When UCI received from the user terminal 20 is acquired via the received signal processing section 304, the control section 301 performs data retransmission control and scheduling control on the user terminal 20 based on the UCI. For example, when HARQ-ACK is acquired from the received signal processing section 304, the control section 301 determines whether retransmission to the user terminal 20 is necessary or not, and exerts control so that retransmission processing is performed when retransmission is necessary.

The control section 301 may exert control so that information on resource extension regions such as the mapping rule and the encoding method is reported to predetermined user terminals 20 by using higher layer signaling (for example, RRC signaling), downlink control information (for example, DCI), or a combination of these.

The transmission signal generating section 302 generates downlink signals (downlink control signals, downlink data signals, downlink reference signals and so on) based on commands from the control section 301, and outputs these signals to the mapping section 303. The transmission signal generating section 302 can be constituted by a signal generator, a signal generating circuit or a signal generating device that can be described based on common understanding of the technical field to which the present invention pertains.

For example, the transmission signal generating section 302 generates DL assignments, which report downlink signal assignment information, and UL grants, which report uplink signal assignment information, based on commands from the control section 301. Also, the downlink data signals are subjected to the coding process, the modulation process and so on, by using coding rates and modulation schemes that are determined based on, for example, channel state information (CSI) reported from each user terminal.

The mapping section 303 maps the downlink signals generated in the transmission signal generating section 302 to predetermined radio resources based on commands from the control section 301, and outputs these to the transmitting/receiving sections 103. The mapping section 303 can be constituted by a mapper, a mapping circuit or a mapping device that can be described based on common understanding of the technical field to which the present invention pertains.

The received signal processing section 304 performs receiving processes (for example, demapping, demodulation, decoding and so on) of received signals that are input from the transmitting/receiving sections 103. Here, the received signals include, for example, uplink signals transmitted from the user terminals 20 (uplink control signals, uplink data signals, uplink reference signals and so on). For the received signal processing section 304, a signal processor, a signal processing circuit or a signal processing device that can be described based on common understanding of the technical field to which the present invention pertains can be used.

The received signal processing section 304 outputs the decoded information acquired through the receiving processes to the control section 301. For example, when a PUCCH to contain an HARQ-ACK is received, the received signal processing section 304 outputs this HARQ-ACK to the control section 301. Also, the received signal processing section 304 outputs the received signals, the signals after the receiving processes and so on, to the measurement section 305.

The measurement section 305 conducts measurements with respect to the received signals. The measurement section 305 can be constituted by a measurer, a measurement circuit or a measurement device that can be described based on common understanding of the technical field to which the present invention pertains.

Also, by using the received signals, the received signal processing section 304 may measure the received power (for example, RSRP (Reference Signal Received Power)), the received quality (for example, RSRQ (Reference Signal Received Quality)), channel states and so on. The measurement results may be output to the control section 301.

(User terminal)

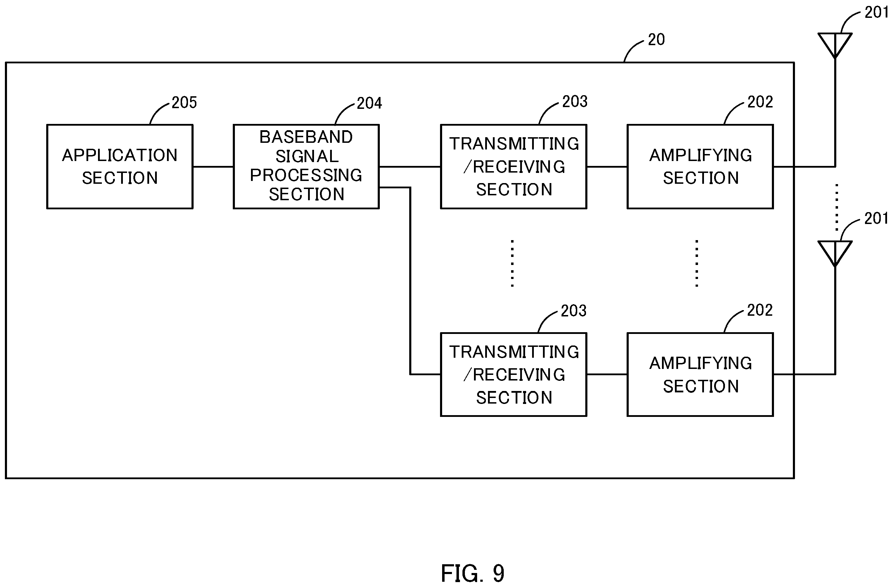

FIG. 9 is a diagram to show an example of an overall structure of a user terminal according to one embodiment of the present invention. A user terminal 20 has a plurality of transmitting/receiving antennas 201, amplifying sections 202, transmitting/receiving sections 203, a baseband signal processing section 204 and an application section 205. Note that one or more transmitting/receiving antennas 201, amplifying sections 202 and transmitting/receiving sections 203 may be provided.

A radio frequency signal that is received in the transmitting/receiving antenna 201 is amplified in the amplifying section 202. The transmitting/receiving section 203 receives the downlink signal amplified in the amplifying section 202. The received signal is subjected to frequency conversion and converted into the baseband signal in the transmitting/receiving section 203, and output to the baseband signal processing section 204. The transmitting/receiving section 203 can be constituted by a transmitters/receiver, a transmitting/receiving circuit or a transmitting/receiving device that can be described based on common understanding of the technical field to which the present invention pertains. Note that the transmitting/receiving section 203 may be structured as a transmitting/receiving section in one entity, or may be constituted by a transmitting section and a receiving section.

In the baseband signal processing section 204, the baseband signal that is input is subjected to an FFT process, error correction decoding, a retransmission control receiving process, and so on. Downlink user data is forwarded to the application section 205. The application section 205 performs processes related to higher layers above the physical layer and the MAC layer, and so on. Furthermore, in the downlink data, broadcast information is also forwarded to the application section 205.

Meanwhile, uplink user data is input from the application section 205 to the baseband signal processing section 204. The baseband signal processing section 204 performs a retransmission control transmission process (for example, an HARQ transmission process), channel coding, pre-coding, a discrete Fourier transform (DFT) process, an IFFT process and so on, and the result is forwarded to the transmitting/receiving section 203. The baseband signal that is output from the baseband signal processing section 204 is converted into a radio frequency bandwidth in the transmitting/receiving sections 203. The radio frequency signals that are subjected to frequency conversion in the transmitting/receiving sections 203 are amplified in the amplifying sections 202, and transmitted from the transmitting/receiving antennas 201.

Note that the transmitting/receiving section 203 receives information (for example, DCI) commanding transmission of an uplink shared channel for a predetermined CC from the radio base station 10.

Further, the transmitting/receiving section 203 transmits UCI (for example, HARQ-ACK and/or RI), mapped to resource extension regions, based on the command information, to the radio base station 10, using the PUSCH. The symbols indicating the UCI may be mapped to five or more symbol times within one TTI.

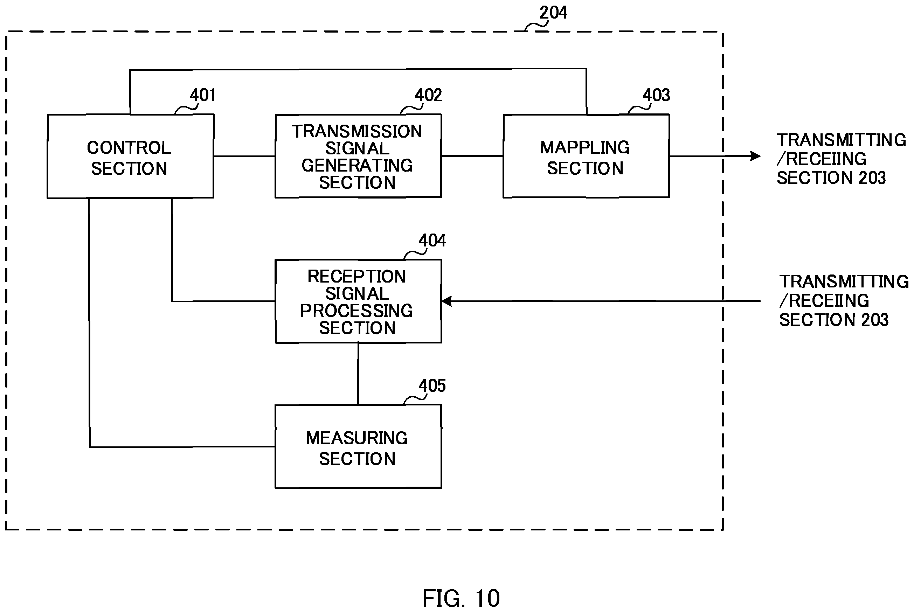

FIG. 10 is a diagram to show an example of a functional structure of a user terminal according to one embodiment of the present invention. Note that, although FIG. 10 primarily shows functional blocks that pertain to characteristic parts of the present embodiment, the user terminal 20 has other functional blocks that are necessary for radio communication as well. As shown in FIG. 10, the baseband signal processing section 204 provided in the user terminal 20 at least has a control section 401, a transmission signal generating section (generation section) 402, a mapping section 403, a received signal processing section 404 and a measurement section 405.

The control section 401 controls the whole of the user terminal 20. For the control section 401, a controller, a control circuit or a control device that can be described based on common understanding of the technical field to which the present invention pertains can be used.

The control section 401, for example, controls the generation of signals in the transmission signal generating section 402, the assignment of signals by the mapping section 403, and so on. Furthermore, the control section 401 controls the signal receiving processes in the received signal processing section 404, the measurements of signals in the measurement section 405, and so on.

The control section 401 acquires the downlink control signals (signals transmitted in the PDCCH/EPDCCH) and downlink data signals (signals transmitted in the PDSCH) transmitted from the radio base station 10, from the received signal processing section 404. The control section 401 controls the generation of uplink control signals (for example, delivery acknowledgement signals (HARQ-ACKs) and so on) and uplink data signals based on the downlink control signals, the results of deciding whether or not re transmission control is necessary for the downlink data signals, and so on.

To be more specific, the control section 401 controls the transmission signal generation section 402 and the mapping section 403 so that the symbols of HARQ-ACK and/or RI are mapped to five or more SC-FDMA symbols within one TTI (for example, one subframe) and transmitted in the PUSCH.

The control section 401 calculates the number of symbols necessary for UCI (HARQ-ACK, RI) according to, for example, equation 3 (in non-MIMO) or equation 4 (in MIMO).

In addition, the control section 401 performs control so that predetermined coding is applied to each UCI so as to obtain CW. Then, the control section 401 performs control so that each obtained CW (UCI bit sequence) is multiplexed with user data and interleaved. Further, the control section 401 controls processing such as scrambling, data modulation, mapping, etc. for the interleaved bit sequences

When command information (for example, DCI) for indicating the radio resource to use in the uplink shared channel (for example, PUSCH) is input from the received signal processing section 404, the control section 401 identifies the allocated PUSCH resources based on this command information. Also, when the control section 401 determines that there is UCI to be transmitted at the timing of the TTI transmitting the uplink shared channel, the control section 401 can control the transmission signal generation section 402 and the mapping section 403 so that UCI is transmitted in the uplink shared channel.

The control section 401 can perform control so that at least a part of the resource extension regions is mapped to the UCI (for example, HARQ-ACK and/or RI) in the scheduled PUSCH region. When normal TTI is used, the zeroth, sixth, seventh and thirteenth SC-FDMA symbols can be used as resource extension regions. When the TTI to which the SRS is transmitted (the TTI to which the SRS is transmitted from the user terminal 20 and/or another user terminal 20) is used, the zeroth, sixth and seventh SC-FDMA symbols are used as resource extension regions. That is, the control section 401 can switch the resource extension regions (the number of SC-FDMA symbols constituting the resource extension regions) depending on whether or not the TTI (subframe) is an SRS subframe.

Here, if the symbol time used for UCI in the existing LTE system exists enough for allocation, the control section 401 does not have to map the UCI to the resource extension region.

The control section 401 may control UCI mapping in resource extension regions based on one of the following mapping rules or a combination thereof: (1) UCI is mapped preferentially to symbols in the middle of the TTI (if the resources available for the symbol in the center of the TTI, the symbols at the end of the TTI may be used), (2) UCI is mapped to the top symbol in the TTI when there is no available resource in the symbols in the center of the TTI, (3) UCI is mapped to the symbol at the end of the TTI when there is no available resource in the top symbol of the TTI, (4) UCI is well-balanced (evenly) mapped to symbols of each available symbol time, (5) UCI is not mapped to the symbol at the end of TTI, (6) when feeding back a plurality of UCIs (for example, HARQ-ACK and RI) within the same TTI, predetermined UCI (for example, HARQ-ACK) is mapped to a symbol at the center of the TTI, other UCIs are mapped is mapped to symbols at the end of the TTI, and (7) when feeding back a plurality of UCIs (for example, HARQ-ACK and RI) within the same TTI, a predetermined UCI (for example, HARQ-ACK) is preferentially mapped to the resource extension region, and the predetermined UCI After being mapped, other UCI is mapped to the remaining resource extension region.

Further, the control section 401 may be configured to validate the UCI mapping in the resource extension region when any one of the following conditions or a combination thereof is satisfied: (1) CA using six or more CCs is configured, (2) the HARQ-ACK/RI payload exceeds the stipulation of Rel. 12, (3) the number of UCI bits + the number of CRC bits exceeds a predetermined value, and (4) even if the resource extension region is used for UCI, the coding rate of the UL-SCH does not exceed the predetermined value.

When information on the resource extension region is input from the received signal processing section 404, the control section 401 may change control contents (mapping rule, encoding method, etc.) based on the information.

The transmission signal generating section 402 generates uplink signals (uplink control signals, uplink data signals, uplink reference signals and so on) based on commands from the control section 401, and outputs these signals to the mapping section 403. The transmission signal generating section 402 can be constituted by a signal generator, a signal generating circuit or a signal generating device that can be described based on common understanding of the technical field to which the present invention pertains.

For example, the transmission information generating section 402 generates uplink control signals such as delivery acknowledgement signals (HARQ-ACKs), channel state information (CSI) and so on, based on commands from the control section 401. Also, the transmission signal generating section 402 generates uplink data signals based on commands from the control section 401. For example, when a UL grant is included in a downlink control signal that is reported from the radio base station 10, the control section 401 commands the transmission signal generating section 402 to generate an uplink data signal.

The mapping section 403 maps the uplink signals generated in the transmission signal generating section 402 to radio resources based on commands from the control section 401, and output the result to the transmitting/receiving sections 203. For example, the mapping section 403 maps symbols indicating HARQ-ACK and/or RI to five or more SC-FDMA symbols within one TTI (for example, one subframe) based on a command from the control section 401. When transmission using multiple layers is configured in the user terminal 20, the symbols of the UCI of one layer may be mapped in the same way as the other layers. The mapping section 403 can be constituted by a mapper, a mapping circuit or a mapping device that can be described based on common understanding of the technical field to which the present invention pertains.

The received signal processing section 404 performs receiving processes (for example, demapping, demodulation, decoding and so on) of received signals that are input from the transmitting/receiving section 203. Here, the received signals include, for example, downlink signals (downlink control signals, downlink data signals, downlink reference signals and so on) that are transmitted from the radio base station 10. The received signal processing section 404 can be constituted by a signal processor, a signal processing circuit or a signal processing device that can be described based on common understanding of the technical field to which the present invention pertains. Also, the received signal processing section 404 can constitute the receiving section according to the present invention.

The received signal processing section 404 output the decoded information that is acquired through the receiving processes to the control section 401. The received signal processing section 404 outputs, for example, broadcast information, system information, RRC signaling, DCI and so on, to the control section 401. Also, the received signal processing section 404 outputs the received signals, the signals after the receiving processes and so on to the measurement section 405.

The measurement section 405 conducts measurements with respect to the received signals. The measurement section 405 can be constituted by a measurer, a measurement circuit or a measurement device that can be described based on common understanding of the technical field to which the present invention pertains.

The measurement section 405 may measure, for example, the received power (for example, RSRP), the received quality (for example, RSRQ), the channel states and so on of the received signals. The measurement results may be output to the control section 401.

Note that the block diagrams that have been used to describe the above embodiments show blocks in functional units. These functional blocks (components) may be implemented in arbitrary combinations of hardware and software. Also, the means for implementing each functional block is not particularly limited. That is, each functional block may be implemented with one physically-integrated device, or may be implemented by connecting two physically-separate devices via radio or wire and using these multiple devices.

For example, part or all of the functions of the radio base station 10 and the user terminal 20 may be implemented by using hardware such as an ASIC (Application-Specific Integrated Circuit), a PLD (Programmable Logic Device), an FPGA (Field Programmable Gate Array) and so on. Also, the radio base stations 10 and user terminals 20 may be implemented with a computer device that includes a processor (CPU), a communication interface for connecting with networks, a memory and a computer-readable storage medium that holds programs. That is, the radio base stations and user terminals according to an embodiment of the present invention may function as computers that execute the processes of the radio communication method of the present invention.

Here, the processor and the memory are connected with a bus for communicating information. Also, the computer-readable recording medium is a storage medium such as, for example, a flexible disk, an opto-magnetic disk, a ROM (Read Only Memory), an EPROM (Erasable Programmable ROM), a CD-ROM (Compact Disc-ROM), a RAM (Random Access Memory), a hard disk and so on. Also, the programs may be transmitted from the network through, for example, electric communication channels. Also, the radio base stations 10 and user terminals 20 may include input devices such as input keys and output devices such as displays.

The functional structures of the radio base stations 10 and user terminals 20 may be implemented with the above-described hardware, may be implemented with software modules that are executed on the processor, or may be implemented with combinations of both. The processor controls the whole of the user terminals by running an operating system. Also, the processor reads programs, software modules and data from the storage medium into the memory, and executes various types of processes.

Here, these programs have only to be programs that make a computer execute each operation that has been described with the above embodiments. For example, the control section 401 of the user terminals 20 may be stored in the memory and implemented by a control program that operates on the processor, and other functional blocks may be implemented likewise.

Also, software and commands may be transmitted and received via communication media. For example, when software is transmitted from a website, a server or other remote sources by using wired technologies such as coaxial cables, optical fiber cables, twisted-pair cables and digital subscriber lines (DSL) and/or wireless technologies such as infrared radiation, radio and microwaves, these wired technologies and/or wireless technologies are also included in the definition of communication media.

Note that the terminology used in this description and the terminology that is needed to understand this description may be replaced by other terms that convey the same or similar meanings. For example, "channels" and/or "symbols" may be replaced by "signals" (or "signaling"). Also, "signals" may be "messages." Furthermore, "component carriers" (CCs) may be referred to as "carrier frequencies," "cells" and so on.

Also, the information and parameters described in this description may be represented in absolute values or in relative values with respect to a predetermined value, or may be represented in other information formats. For example, radio resources may be specified by indices.

The information, signals and/or others described in this description may be represented by using a variety of different technologies. For example, data, commands, commands, information, signals, bits, symbols and chips, all of which may be referenced throughout the description, may be represented by voltages, currents, electromagnetic waves, magnetic fields or particles, optical fields or photons, or any combination of these.

The examples/embodiments illustrated in this description may be used individually or in combinations, and may be switched depending on the implementation. Also, a report of predetermined information (for example, a report to the effect that "X holds") does not necessarily have to be sent explicitly, and can be sent implicitly (by, for example, not reporting this piece of information).

Reporting of information is by no means limited to the example s/embodiments described in this description, and other methods may be used as well. For example, reporting of information may be implemented by using physical layer signaling (for example, DCI (Downlink Control Information) and UCI (Uplink Control Information)), higher layer signaling (for example, RRC (Radio Resource Control) signaling, MAC (Medium Access Control) signaling, and broadcast information (the MIB (Master Information Block) and SIBs (System Information Blocks))), other signals or combinations of these. Also, RRC signaling may be referred to as "RRC messages," and can be, for example, an RRC connection setup message, RRC connection reconfiguration message, and so on.

The examples/embodiments illustrated in this description may be applied to LTE (Long Term Evolution), LTE-A (LTE-Advanced), SUPER 3G, IMT-Advanced, 4G, 5G, FRA (Future Radio Access), CDMA 2000, UMB (Ultra Mobile Broadband), IEEE 802.11 (Wi-Fi), IEEE 802.16 (WiMAX), IEEE 802.20, UWB (Ultra-WideBand), Bluetooth (registered trademark), and other adequate systems, and/or next-generation systems that are enhanced based on these.

The order of processes, sequences, flowcharts and so on that have been used to describe the examples/embodiments herein may be re-ordered as long as inconsistencies do not arise. For example, although various methods have been illustrated in this description with various components of steps in exemplary orders, the specific orders that illustrated herein are by no means limiting.

Now, although the present invention has been described in detail above, it should be obvious to a person skilled in the art that the present invention is by no means limited to the embodiments described herein. The present invention can be implemented with various corrections and in various modifications, without departing from the spirit and scope of the present invention defined by the recitations of claims. Consequently, the description herein is provided only for the purpose of explaining example s, and should by no means be construed to limit the present invention in any way.

The disclosure of Japanese Patent Application No. 2015-152396, filed on July 31, 2015, including the specification, drawings and abstract, is incorporated herein by reference in its entirety.

**Claims**

1. A user terminal that communicates by using a plurality of component carriers (CCs), the user terminal comprising:

   a generation section that generates uplink control information; and
   a mapping section that maps symbols indicating the uplink control information to radio resources used to transmit an uplink shared channel,
   wherein the mapping section maps the symbols indicating the uplink control information to five or more SC-FDMA (Single-Carrier Frequency Division Multiple Access) symbols within one TTI (Transmission Time Interval).

2. The user terminal according to claim 1, wherein the mapping section maps the symbols indicating the uplink control information to at least one of the zeroth, the sixth, the seventh, and the thirteenth SC-FDMA symbols in the one TTI.

3. The user terminal according to claim 2, wherein the mapping section maps the symbols indicating the uplink control information to at least one of the zeroth, the sixth and the seventh SC-FDMA symbols in the one TTI in which an SRS (Sounding Reference Signal) is transmitted, and does not map the symbols indicating the uplink control information to the thirteenth SC-FDMA symbol.

4. The user terminal according to claim 3, wherein mapping section maps the symbols indicating the uplink control information to at least one of the zeroth, the sixth, the seventh, and the thirteenth SC-FDMA symbols in the one TTI when the number of symbols indicating the uplink control information is greater than four times the number of scheduled subcarriers.

5. The user terminal according to one of claims 1 to 4, wherein the symbols indicating the uplink control information comprises a symbol indicating delivery acknowledgment information and/or a symbol indicating a rank indicator.

6. The user terminal according to one of claims 2 to 5, wherein the mapping section preferentially maps the symbols indicating the uplink control information to the sixth and seventh SC-FDMA symbols in the one TTI.

7. The user terminal according to one of claims 2 to 5, wherein the mapping section maps the symbols indicating the uplink control information so that the difference in the number of symbols mapped to the zeroth, the sixth, the seventh and the thirteenth SC-FDMA symbols within the one TTI is one or less.

8. The user terminal according to claim 5, wherein the mapping section maps a symbol indicating acknowledgment information to the sixth and seventh SC-FDMA symbols in the one TTI and maps a symbol indicating a rank indicator to the zeroth and thirteenth SC-FDMA symbols in the one TTI.

9. A radio base station that communicates with a user terminal that uses a plurality of component carriers (CCs), the radio base station comprising:

a transmission section that transmits scheduling information of an uplink shared channel; and
a receiving section that receives an uplink control signal mapped based on the scheduling information, wherein symbols indicating the uplink control information are mapped to five or more SC-FDMA (Single-Carrier Frequency Division Multiple Access) symbols within one TTI (Transmission Time Interval).

10. A radio communication method for a user terminal that communicates by using a plurality of component carriers (CCs), the radio communication method comprising:

a generation step of generating uplink control information; and
a mapping step of mapping symbols indicating the uplink control information to radio resources used to transmit an uplink shared channel,
wherein, in the mapping step, the symbols indicating the uplink control information are mapped to five or more SC-FDMA (Single-Carrier Frequency Division Multiple Access) symbols within one TTI (Transmission Time Interval).

Normal cyclic prefix frame (Mapping before DFT)

FIG. 1

CW0

| | 0 | 1 | 2 | 3 | 4 | 5 | 6 | 7 | 8 | 9 | 10 | 11 | 12 | 13 |

CW1

| | 0 | 1 | 2 | 3 | 4 | 5 | 6 | 7 | 8 | 9 | 10 | 11 | 12 | 13 |

Subcarriers

1 UL subframe

| | CQI/PMI |
|---|---|
| | RI |
| | DMRS |
| | ACK/NACK |
| | DATA |

FIG. 2

EP 3 331 300 A1

FIG. 3

EP 3 331 300 A1

FIG. 4

□ RESOURCE EXTENTION REGION

1 UL subframe

FIG. 5A

FIG. 5B

1 UL subframe

RESOURCE
EXTENTION REGION
FOR ACK/NACK

RESOURCE
EXTENTION REGION
FOR RI

EP 3 331 300 A1

FIG. 6

FIG. 7

TO HIGHER STATION APPARATUS 30 OR OTHER RADIO BASE STATION 10

INTERFACE SECTION (106)

BASEBAND SIGNAL GENERATING SECTION (104)

CALL PROCESSING SECTION (105)

TRANSMITTING /RECEIVING SECTION (103)

TRANSMITTING /RECEIVING SECTION (103)

AMPLIFYING SECTION (102)

AMPLIFYING SECTION (102)

10

101

101

FIG. 8

FIG. 9

204

CONTROL
SECTION
401

TRANSMISSION
SIGNAL
GENERATING
SECTION
402

MAPPLING
SECTION
403

TRANSMITTING
/RECEIING
SECTION 203

RECEPTION
SIGNAL
PROCESSING
SECTION
404

TRANSMITTING
/RECEIING
SECTION 203

MEASURING
SECTION
405

FIG. 10

## INTERNATIONAL SEARCH REPORT

| | International application No. |
|---|---|
| | PCT/JP2016/070532 |

A. CLASSIFICATION OF SUBJECT MATTER
*H04W72/04(2009.01)i*

According to International Patent Classification (IPC) or to both national classification and IPC

B. FIELDS SEARCHED

Minimum documentation searched (classification system followed by classification symbols)
H04W72/04

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2016 |
| Kokai Jitsuyo Shinan Koho | 1971-2016 | Toroku Jitsuyo Shinan Koho | 1994-2016 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>Y | CATT, UCI feedback on PUSCH for up to 32 CCs[online], 3GPP TSG-RAN WG1#80b R1-151351, URL:http://www.3gpp.org/ftp/tsg_ran/WG1_RL1/ TSGR1_80b/Docs/R1-151351.zip, 2015.04.20 | 1,2,4-10<br>3 |
| Y<br>A | JP 2015-513818 A (LG Electronics Inc.), 14 May 2015 (14.05.2015), paragraphs [0139], [0155]<br>& US 2014/0376356 A1<br>paragraphs [0071], [0088]<br>& WO 2013/125840 A1    & EP 2817903 A1<br>& CN 104126280 A    & KR 10-2014-0131915 A | 3<br>1,2,4-10 |

☒ Further documents are listed in the continuation of Box C.   ☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 26 September 2016 (26.09.16) | 04 October 2016 (04.10.16) |

| Name and mailing address of the ISA/ | Authorized officer |
|---|---|
| Japan Patent Office<br>3-4-3,Kasumigaseki,Chiyoda-ku,<br>Tokyo 100-8915,Japan | |
| | Telephone No. |

Form PCT/ISA/210 (second sheet) (January 2015)

**INTERNATIONAL SEARCH REPORT**

International application No.

PCT/JP2016/070532

C (Continuation).　DOCUMENTS CONSIDERED TO BE RELEVANT

| Category* | Citation of document, with indication, where appropriate, of the relevant passages | Relevant to claim No. |
|---|---|---|
| A | WO 2014/201614 A1　(HUAWEI TECHNOLOGIES CO., LTD.), <br> 24 December 2014 (24.12.2014), <br> entire text; all drawings <br> & US 2016/0100398 A1 <br> whole document <br> & EP 2999282 A1　　　　& CN 104871619 A | 1-10 |

Form PCT/ISA/210 (continuation of second sheet) (January 2015)

**REFERENCES CITED IN THE DESCRIPTION**

**Patent documents cited in the description**

- JP 2015152396 A

**Non-patent literature cited in the description**

- Evolved Universal Terrestrial Radio Access (E-UTRA) and Evolved Universal Terrestrial Radio Access Network (E-UTRAN); Overall Description; Stage 2. *3GPP TS 36.300*